# FASCICULE DE BREVET EUROPEEN

(11) **EP 3 538 849 B1**
(45) Date de publication et mention de la délivrance du brevet: **09.09.2020**
(21) Numéro de dépôt: 17792037.8
(22) Date de dépôt: 27.10.2017
(51) Int. Cl.: G01D 5/241

(54) **CAPTEUR ANGULAIRE SANS CONTACT**
KONTAKTLOSER WINKELSENSOR
CONTACTLESS ANGULAR SENSOR

(30) Priorité: 14.11.2016 FR 1661010
(43) Date de publication de la demande: 18.09.2019
(73) Titulaire: Safran Electronics & Defense, 92100 Boulogne-Billancourt (FR)
(72) Inventeur: GUILLOT, François, 92100 Boulogne-Billancourt (FR); BICKARD, Thierry, 92100 Boulogne-Billancourt (FR)
(74) Mandataire: Lavialle, Bruno François Stéphane
(86) Numéro de dépôt international: PCT/EP2017/077699
(87) Numéro de publication internationale: WO 2018/086920

(56) Documents cités:
- EP-A2- 1 918 679
- GB-A- 2 508 924
- US-A1- 2004 032 255

## Description

La présente invention concerne la détection sans contact d'un paramètre de déplacement angulaire tel que la position ou la vitesse d'un objet mobile en rotation. L'invention concerne plus particulièrement la détection de la position angulaire ou de la vitesse angulaire d'une roue de train d'atterrissage.

Il existe de nombreux capteurs de mouvement angulaire permettant de déterminer la vitesse ou la position d'un objet en rotation et notamment : les génératrices de tachymétrie dont la tension est proportionnelle à la vitesse de rotation, les codeurs angulaires optiques, les résolveurs... Un capteur de mouvement angulaire connu est par exemple divulgué dans US 2004/032255 A1.

Ces capteurs présentent cependant l'un au moins des inconvénients suivants : ils sont sujets à une usure induisant une dégradation relativement rapide de la fiabilité ou de la précision, structure mécanique ou électronique relativement compliquée et donc onéreuse, sensibilité aux conditions de fonctionnement comme la température ou les vibrations.

Un but de l'invention est de proposer un capteur de structure simple et ayant une durée de vie relativement longue.

A cet effet, on prévoit, selon l'invention, un capteur de mouvement angulaire d'un objet, comprenant un bâti sur lequel sont montées une première partie fixe et une deuxième partie mobile en rotation par rapport à la première partie et destinée à être liée en rotation à l'objet. La première partie et la deuxième partie portent respectivement un premier circuit imprimé et un deuxième circuit imprimé en regard l'un de l'autre qui comportent des plages conductrices pour former des secteurs capacitifs et, respectivement, un enroulement primaire d'excitation et un enroulement secondaire d'excitation. Les enroulements et les plages conductrices sont centrés sur l'axe de rotation de la deuxième partie et agencés pour créer respectivement des couplages magnétiques et capacitifs entre le premier circuit imprimé et le deuxième circuit imprimé. Le premier circuit imprimé est relié à un circuit électronique de commande agencé pour créer des signaux d'excitation transmis par le premier circuit imprimé au deuxième circuit imprimé par couplage magnétique et démoduler des signaux transmis par le deuxième circuit imprimé au premier circuit imprimé par couplage capacitif.

Ainsi, le premier circuit imprimé et le deuxième circuit imprimé communiquent via des couplages magnétiques et des couplages capacitifs de sorte qu'il n'y pas de contact entre la partie fixe et la partie mobile. Ceci limite le risque d'usure. En outre, une telle structure ne présente que peu de dérives en raison des variations de température. Ce capteur est de plus relativement facile à fabriquer et ne nécessite pas de réglages compliqués.

Selon un mode de réalisation particulier, le premier circuit imprimé comprend deux plages conductrices qui s'étendent radialement et sont diamétralement opposées l'une à l'autre le deuxième circuit imprimé comprend une piste commune extérieure et une piste commune intérieure qui sont de formes circulaires centrées sur l'axe de rotation de la deuxième partie, et les plages conductrices du deuxième circuit imprimé comprennent des premières plages conductrices s'étendant radialement depuis la piste commune extérieure et des deuxièmes plages conductrices s'étendant radialement depuis la piste commune intérieure en alternance avec les premières plages conductrices de telle manière que chacune des premières plages conductrices soit diamétralement opposée à l'une des deuxièmes plages conductrices.

L'agencement des plages conductrices formant les secteurs capacitifs autorise une alternance des signaux de mesure en phase et en opposition de phase en dépendance avec la position angulaire relative du premier circuit imprimé et du deuxième circuit imprimé. Ceci permet l'obtention de signaux de mesure de relativement grande amplitude, ce qui en facilite le traitement.

D'autres caractéristiques et avantages de l'invention ressortiront à la lecture de la description qui suit d'un mode de réalisation particulier non limitatif de l'invention.

Il sera fait référence aux dessins annexés, parmi lesquels :

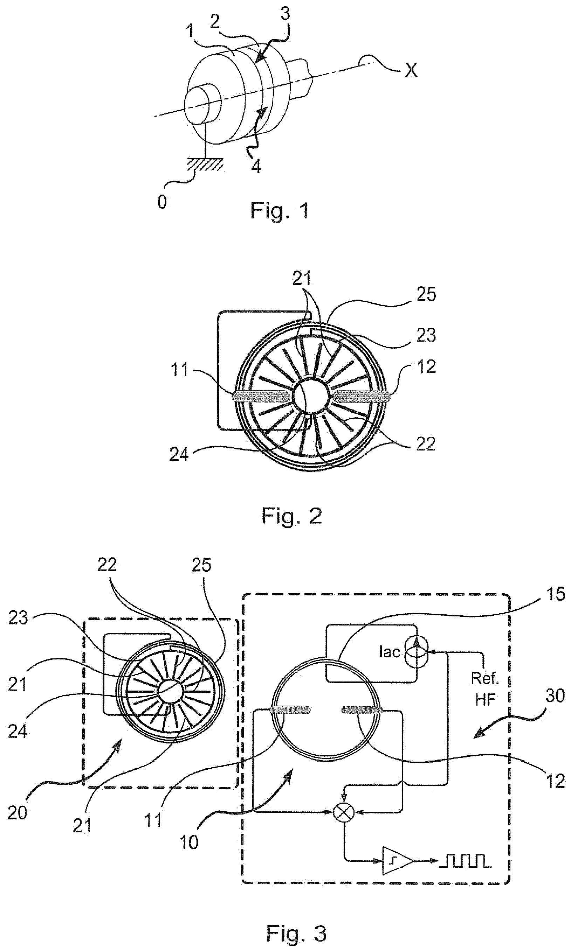

- la figure 1 est une vue schématique en perspective d'un capteur conforme à l'invention ;
- la figure 2 est une vue de face montrant en superposition le premier circuit imprimé et le deuxième circuit imprimé ;
- la figure 3 est une vue schématique simplifié du circuit électrique global du capteur ;

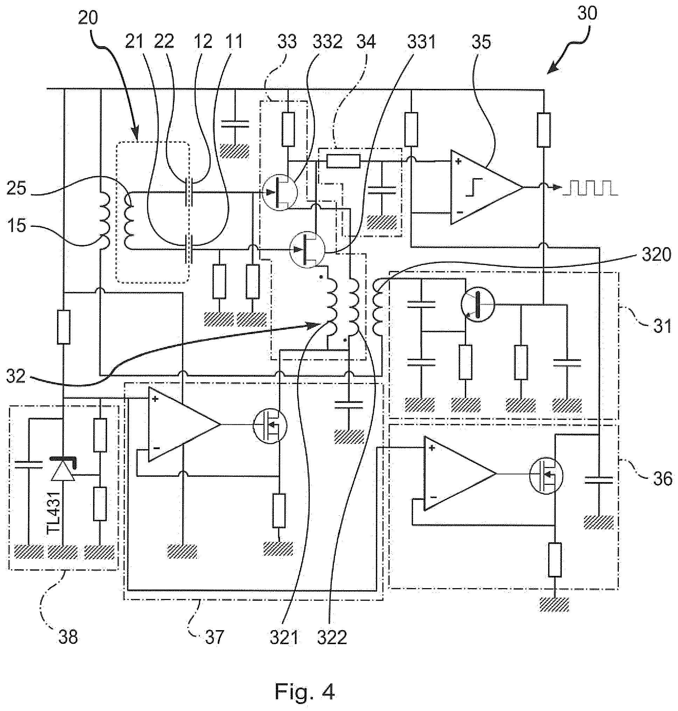

- la figure 4 est un schéma du circuit électronique de commande du capteur.

En référence aux figures, l'invention est un capteur de mouvement angulaire comprenant un bâti 0 sur lequel sont montées une première partie 1, fixe, et une deuxième partie 2 mobile en rotation par rapport à la première partie 1. La deuxième partie 2 est destinée à être liée en rotation à l'objet dont le mouvement angulaire est à mesurer, par exemple une roue de véhicule. La première partie 1 et la deuxième partie 2 sont ici en forme de disques coaxiaux de mêmes diamètres.

La première partie 1 et la deuxième partie 2 ont des faces 3, 4 en regard l'une de l'autre qui portent respectivement un premier circuit imprimé et un deuxième circuit imprimé qui sont généralement désignés 10, 20.

Le premier circuit imprimé 10 comporte un enroulement primaire d'excitation 15 sous la forme d'une bobine à plat s'étendant en périphérie de la première partie 1 et deux plages conductrices 11, 12 qui ont une forme allongée s'étendant radialement par rapport à l'axe de rotation X et sont diamétralement opposées l'une à l'autre. L'enroulement primaire d'excitation 15 et les plages conductrices 11, 12 sont centrés sur l'axe de rotation X de la deuxième partie 2.

Le deuxième circuit imprimé 20 comporte :
- un enroulement secondaire d'excitation 25 sous la forme d'une bobine à plat qui s'étend en périphérie de la deuxième partie 2 ;
- des premières plages conductrices 21, de forme allongée, s'étendant radialement depuis une piste commune extérieure 23 pour former chacune un secteur capacitif avec chacune des plages conductrices 11, 12 lorsqu'elles sont en regard de celle-ci ;
- des deuxièmes plages conductrices 22, de forme allongée, s'étendant radialement depuis une piste commune intérieure 24 pour former chacune un secteur capacitif avec chacune des plages conductrices 11, 12 lorsqu'elles sont en regard de celle-ci.

La piste commune extérieure 23 et la piste commune intérieure 24 sont de formes circulaires centrées sur l'axe de rotation X de la deuxième partie 2. La piste commune extérieure 23 est reliée à une première extrémité de l'enroulement secondaire d'excitation 25 et la piste commune intérieure 24 est reliée à une deuxième extrémité de l'enroulement secondaire d'excitation 25.

Les premières plages conductrices 21 s'étendent en alternance avec les deuxièmes plages conductrices 22 de telle manière que chaque première plage conductrice 21 soit diamétralement opposée à l'une des deuxièmes plages conductrices 22. Les premières plages conductrices 21 sont écartées d'environ 40° deux à deux et, donc, les deuxièmes plages conductrices 22 sont, elles aussi, écartées d'environ 40° deux à deux. Chaque première plage conductrice 21 est espacée de 20° par rapport aux deux deuxièmes plages conductrices 22 qui l'encadrent, et inversement.

Le premier circuit imprimé 1 est relié à un circuit électronique de commande 30 agencé pour créer des signaux d'excitation transmis par le premier circuit imprimé 1 au deuxième circuit imprimé 2 par couplage magnétique et démoduler des signaux de mesure transmis par le deuxième circuit imprimé 2 au premier circuit imprimé 1 par couplage capacitif.

Le circuit électronique de commande 30 comprend :
- un auto-oscillateur 31 relié à un primaire 320 d'un transformateur 32 et à l'enroulement primaire d'excitation 15,
- un démodulateur synchrone 33 ayant des entrées reliées aux plages conductrices 11, 12 et une sortie reliée via un filtre 34 à l'entrée positive d'un comparateur de sortie 35 ayant une entrée négative reliée à une première partie de circuit 36 fournissant une première intensité de référence.

Le démodulateur synchrone 33 comprend deux transistors 331, 332 ayant une grille reliée respectivement aux plages conductrices 11, 12, un drain relié à une extrémité du secondaire 321, 322 du transformateur 32, et une source reliée à l'entrée positive du comparateur de sortie 35. Les secondaires 321, 322 ont une extrémité opposée reliée à une deuxième partie de circuit 37 fournissant une deuxième intensité de référence.

Les parties de circuit 36, 37 forment deux sources de courant de référence pour définir des points de repos des transistors 331, 332 du démodulateur 33 et des seuils du comparateur de sortie 35.

Le circuit électronique de commande 30 comprend également une source de tension régulée 38 alimentant l'ensemble du circuit électronique de commande 30.

Le transformateur 32 permet de synchroniser le démodulateur synchrone 33 sur l'auto-oscillateur 31 de manière à récupérer des signaux de mesure d'amplitude maximale.

Le capteur de l'invention associe deux modes de couplages : un couplage magnétique haute fréquence pour la voie montante (excitation) et un couplage capacitif pour la voie descendante (mesure).

Le comparateur de sortie 35 est agencé pour discriminer des signaux logiques hauts et bas après filtrage du signal démodulé pour fournir un signal en créneaux permettant de compter les tours de la deuxième partie 2 : en effet, chaque créneau correspond à un angle de 20° de sorte que seize créneaux correspondent à un tour complet. Il est donc possible de compter le nombre de tours mais aussi de déterminer la position angulaire du moteur entre deux tours.

Bien entendu, l'invention n'est pas limitée au mode de réalisation décrit mais englobe toute variante entrant dans le champ de l'invention telle que définie par les revendications.

En particulier, le circuit électronique de commande peut avoir une structure différente de celle décrite et par exemple ne pas comporter deux sources de courant ou de transformateur de synchronisation.

Les circuits imprimés peuvent aussi avoir une structure différente. Par exemple, le deuxième circuit imprimé peut comprendre un nombre différent de plages conductrices. Les circuits imprimés peuvent être agencés pour ne pas fournir deux signaux de mesure en opposition de phase même si cette caractéristique est intéressante pour avoir un signal modulé de grande amplitude.

L'écart angulaire entre les plages conductrices des circuits imprimés peut être inférieur ou supérieur à celui indiqué. L'écart angulaire sera choisi en fonction de la résolution attendue du capteur et des contraintes de fabrication des circuits imprimés.

## Revendications

1. Capteur de mouvement angulaire d'un objet, comprenant un bâti (0) sur lequel sont montées une première partie (1) fixe et une deuxième partie (2) mobile en rotation par rapport à la première partie et destinée à être liée en rotation à l'objet, la première partie et la deuxième partie portant respectivement un premier circuit imprimé (10) et un deuxième circuit imprimé (20) en regard l'un de l'autre qui comportent des plages conductrices (11, 12, 21, 22) pour former des secteurs capacitifs et, respectivement, un enroulement primaire d'excitation (15) et un enroulement secondaire d'excitation (25) relié aux plages conductrices (21, 22) du deuxième circuit imprimé ; les enroulements et les plages conductrices étant centrés sur l'axe de rotation (X) de la deuxième partie et agencés pour créer respectivement un couplage magnétique et un couplage capacitif entre le premier circuit imprimé et le deuxième circuit imprimé ; le premier circuit imprimé étant relié à un circuit électronique de commande (30) agencé pour créer des signaux d'excitation transmis par le premier circuit imprimé au deuxième circuit imprimé par couplage magnétique et démoduler des signaux transmis par le deuxième circuit imprimé au premier circuit imprimé par couplage capacitif.

2. Capteur selon la revendication 1, dans lequel le premier circuit imprimé (10) comprend deux plages conductrices (11, 12) qui s'étendent radialement et sont diamétralement opposées l'une à l'autre.

3. Capteur selon la revendication 1 ou la revendication 2, dans lequel le deuxième circuit imprimé (20) comprend une piste commune extérieure (23) et une piste commune intérieure (24) qui sont de formes circulaires centrées sur l'axe de rotation (X) de la deuxième partie (2), et les plages conductrices (21, 22) du deuxième circuit imprimé comprennent des premières plages conductrices (21) s'étendant radialement depuis la piste commune extérieure et des deuxièmes plages conductrices (22) s'étendant radialement depuis la piste commune intérieure en alternance avec les premières plages conductrices de telle manière que chacune des premières plages conductrices soit diamétralement opposée à l'une des deuxièmes plages conductrices, les pistes communes étant reliées chacune à une extrémité de l'enroulement secondaire d'excitation (25).

4. Capteur selon la revendication 3, dans lequel les premières plages conductrices (21) du deuxième circuit imprimé (20) sont écartées d'environ 40° deux à deux.

5. Capteur selon l'une quelconque des revendications précédentes, dans lequel le circuit électronique de commande (30) comprend un auto-oscillateur (31) utilisé pour la création des signaux d'excitation et pour une démodulation synchrone des signaux reçus.

6. Capteur selon la revendication 5, dans lequel le circuit électronique de commande (30) comprend un démodulateur synchrone (33) ayant une sortie reliée via un filtre (34) à un comparateur de sortie (35) agencé pour discriminer des signaux logiques hauts et bas après filtrage du signal démodulé.

7. Capteur selon la revendication 6, dans lequel le circuit électronique de commande (30) comprend deux sources de courant (36, 37) agencées pour définir des points de repos de transistors du démodulateur synchrone (33) et des seuils du comparateur de sortie (35).

## Patentansprüche

1. Sensor zur Erfassung einer Winkelbewegung eines Objekts, umfassend einen Rahmen (0), an dem ein ortsfestes erstes Teil (1) und ein zweites Teil (2) montiert sind, das relativ zu dem ersten Teil drehbar und dazu bestimmt ist, mit dem Objekt drehfest verbunden zu werden, wobei das erste Teil und das zweite Teil eine erste Leiterplatte (10) bzw. eine zweite Leiterplatte (20) tragen, die einander gegenüberliegen und leitende Bereiche (11, 12, 21, 22) umfassen, um kapazitive Sektoren und eine primäre Erregerwicklung (15) bzw. eine sekundäre Erregerwicklung (25) zu bilden, die mit den leitenden Bereichen (21, 22) der zweiten Leiterplatte verbunden ist; wobei die Wicklungen und die leitenden Bereiche auf die Drehachse (X) des zweiten Teils zentriert und so ausgebildet sind, dass sie eine magnetische Kopplung bzw. eine kapazitive Kopplung zwischen der ersten Leiterplatte und der zweiten Leiterplatte erzeugen; wobei die erste Leiterplatte mit einer elektronischen Steuerschaltung (30) verbunden ist, die ausgebildet ist, um Anregungssignale zu erzeugen, die durch die erste Leiterplatte auf die zweite Leiterplatte mittels magnetischer Kopplung übertragen werden, und Signale zu demodulieren, die durch die zweite Leiterplatte auf die erste Leiterplatte mittels kapazitiver Kopplung übertragen werden.

2. Sensor nach Anspruch 1, bei dem die erste Leiterplatte (10) zwei leitende Bereiche (11, 12) umfasst, die sich radial erstrecken und einander diametral entgegengesetzt sind.

3. Sensor nach Anspruch 1 oder Anspruch 2, bei dem die zweite Leiterplatte (20) eine äußere gemeinsame Bahn (23) und eine innere gemeinsame Bahn (24) umfasst, die kreisförmig und auf die Drehachse (X) des zweiten Teils (2) zentriert sind, und die leitenden Bereiche (21, 22) der zweiten Leiterplatte erste leitende Bereiche (21) umfassen, die sich radial von der äußeren gemeinsamen Bahn erstrecken, sowie zweite leitende Bereiche (22), die sich radial von der inneren gemeinsamen Bahn abwechselnd mit den ersten leitenden Bereichen derart erstrecken, dass jeder der ersten leitenden Bereiche einem der zweiten leitenden Bereiche diametral gegenüberliegt, wobei die gemeinsamen Bahnen jeweils mit einem Ende der sekundären Erregerwicklung (25) verbunden sind.

4. Sensor nach Anspruch 3, bei dem die ersten leitenden Bereiche (21) der zweiten Leiterplatte (20) paarweise um ungefähr 40° beabstandet sind.

5. Sensor nach einem der vorhergehenden Ansprüche, bei dem die elektronische Steuerschaltung (30) einen Autooszillator (31) umfasst, der für die Erzeugung der Anregungssignale und für eine synchrone Demodulation der empfangenen Signale verwendet wird.

6. Sensor nach Anspruch 5, bei dem die elektronische Steuerschaltung (30) einen synchronen Demodulator (33) umfasst, der einen Ausgang hat, der über ein Filter (34) mit einem Ausgangskomparator (35) verbunden ist, der so ausgebildet ist, dass er hohe und niedrige Logiksignale nach der Filterung des demodulierten Signals diskriminiert.

7. Sensor nach Anspruch 6, bei dem die elektronische Steuerschaltung (30) zwei Stromquellen (36, 37) umfasst, die so ausgebildet sind, dass sie Ruhepunkte von Transistoren des synchronen Demodulators (33) und Schwellenwerte des Ausgangskomparators (35) definieren.

## Claims

1. A sensor for sensing angular movement of an object, the sensor comprising a structure (0) having mounted thereon a stationary first portion (1) and a second portion (2) that is movable in rotation relative to the first portion and that is to be coupled in rotation with the object, the first portion and the second portion carrying respectively a first printed circuit (10) and a second printed circuit (20) that face each other and that include conductive areas (11, 12, 21, 22) for forming capacitive sectors and, respectively, a primary excitation winding (15) and a secondary excitation winding (25) connected to the conductive areas (21, 22) of the second printed circuit; the windings and the conductive areas being centered on the axis of rotation (X) of the second portion and being arranged respectively to create magnetic coupling and capacitive coupling between the first printed circuit and the second printed circuit; the first printed circuit being connected to an electronic control circuit (30) arranged to create excitation signals that are transmitted by the first printed circuit to the second printed circuit by magnetic coupling, and to demodulate signals transmitted by the second printed circuit to the first printed circuit by capacitive coupling.

2. A sensor according to claim 1, wherein the first printed circuit (10) has two conductive areas (11, 12) that extend radially and that are diametrically opposite each other.

3. A sensor according to claim 1 or claim 2, wherein the second printed circuit (20) has an outer common track (23) and an inner common track (24) that are of circular shape centered on the axis of rotation (X) of the second portion (2), and the conductive areas (21, 22) of the second printed circuit comprise first conductive areas (21) extending radially from the outer common track and second conductive areas (22) extending radially from the inner common track in alternation with the first conductive areas in such a manner that each of the first conductive areas is diametrically opposite one of the second conductive areas, each of the common tracks being connected to a respective end of the secondary excitation winding (25).

4. A sensor according to claim 3, wherein the first conductive areas (21) of the second printed circuit (20) are spaced apart in pairs by about 40°.

5. A sensor according to any preceding claim, wherein the electronic control circuit (30) comprises an auto-oscillator (31) used for creating the excitation signals, and for synchronous demodulation of the received signals.

6. A sensor according to claim 5, wherein the electronic control circuit (30) comprises a synchronous demodulator (33) having an output connected via a filter (34) to an output comparator (35) arranged to discriminate high and low logic signals after the demodulated signal has been filtered.

7. A sensor according to claim 6, wherein the electronic control circuit (30) comprises two current sources (36, 37) arranged to define quiescent points for transistors of the synchronous demodulator (33) and thresholds for the output comparator (35).
